# EUROPEAN PATENT APPLICATION

(11) **EP 4 837 400 A1**
(43) Date of publication of application: **11.11.2026**
(21) Application number: 26166765.3
(22) Date of filing: 23.03.2026
(51) Int. Cl.: A01B 69/00, B60R 1/27

(54) **WORK VEHICLE**

(30) Priority: 08.05.2025 JP 2025077703
(71) Applicant: Yanmar Holdings Co., Ltd., Osaka (JP)
(72) Inventor: BAEK, Myeongho, Iksan-si, Jeonrabukdo (KR); LEE, Gilljae, Iksan-si, Jeonrabukdo (KR); YOO, Eunwoo, Iksan-si, Jeonrabukdo (KR); KIM, Sanghoo, Iksan-si, Jeonrabukdo (KR); KURIBAYASHI, Masaki, Osaka (JP); NISHIMURA, Akihito, Osaka (JP)
(74) Representative: Isarpatent

(57) **Abstract**

To provide a work vehicle that makes a part unnecessary for a bird's-eye view image less likely to be captured by a camera.

A work vehicle 10 includes a plurality of cameras 3 that are mounted at the front, rear, left, and right of a vehicle body 11 and capture images used to generate a bird's-eye view image around the vehicle body 11. Among the plurality of cameras 3, at least one of a left camera 33 that captures an image of an area to the left of the vehicle body 11 and a right camera 34 that captures an image of an area to the right of the vehicle body 11 is disposed outward in a left-right direction D3 of a storage device 8 disposed in a manner to be exposed to the outside of the vehicle body 11.

## Description

### TECHNICAL FIELD

The present invention relates to a work vehicle including a plurality of cameras.

### BACKGROUND ART

As related art, a work vehicle that displays a bird's-eye view image of the work vehicle viewed from above on a display unit is known (e.g., refer to Patent Document 1). In the work vehicle according to the related art, each of a plurality of cameras captures an image of an area around the work vehicle, and the bird's-eye view image of the work vehicle as viewed from above is generated based on the images captured by the cameras.

### PRIOR ART DOCUMENT

### PATENT DOCUMENT

Patent Document 1: JP 2018-101860 A

### SUMMARY OF INVENTION

### TECHNICAL PROBLEM

In the configuration of the above-mentioned related art, there is a problem that a part unnecessary for the bird's-eye view image may be captured by the camera.

It is an object of the present invention to provide a work vehicle that makes a part unnecessary for a bird's-eye view image less likely to be captured by a camera.

### SOLUTION TO PROBLEM

A work vehicle according to one aspect of the present invention includes a plurality of cameras that are mounted at front, rear, left, and right of a vehicle body and capture images used to generate a bird's-eye view image of the vehicle body and surroundings of the vehicle body as viewed from above. Among the plurality of cameras, at least one of a left camera that captures an image of an area to the left of the vehicle body and a right camera that captures an image of an area to the right of the vehicle body is disposed outward in a left-right direction of a storage device disposed in a manner to be exposed to the outside of the vehicle body.

### ADVANTAGEOUS EFFECTS OF INVENTION

The present invention makes it possible to provide a work vehicle that makes a part unnecessary for a bird's-eye view image less likely to be captured by a camera.

### BRIEF DESCRIPTION OF DRAWINGS

FIG. 1 is a schematic perspective view of a work vehicle according to a first embodiment as viewed from the front left;
FIG. 2 is a schematic perspective view of the work vehicle according to the first embodiment as viewed from the rear left;
FIG. 3 is a schematic plan view of the work vehicle according to the first embodiment;
FIG. 4 is a schematic left side view of the work vehicle according to the first embodiment;
FIG. 5 is a schematic right side view of the work vehicle according to the first embodiment;
FIG. 6 is a schematic front view of the work vehicle according to the first embodiment;
FIG. 7 is a schematic rear view of the work vehicle according to the first embodiment;
FIG. 8 is a schematic perspective view of cameras included in the work vehicle according to the first embodiment;
FIG. 9 is a block diagram showing the schematic configuration of the work vehicle according to the first embodiment;
FIG. 10 is a diagram showing an example of a bird's-eye view image displayed on a display device of the work vehicle according to the first embodiment;
FIG. 11 is a diagram showing an example of an irradiation range of a work light and a turn signal of the work vehicle according to the first embodiment;
FIG. 12 is a diagram showing an example of a case in which the work vehicle according to the first embodiment includes a support member;
FIG. 13 is a diagram showing an example of irradiation ranges of headlights of the work vehicle according to the first embodiment; and
FIG. 14 is a diagram showing an example of a mounting member of the work vehicle according to the first embodiment.

### DESCRIPTION OF EMBODIMENTS

Hereinbelow, an embodiment of the present invention will be described with reference to the accompanying drawings. The following embodiment is an example embodying the present invention and is not intended to limit the technical scope of the present invention.

### (First embodiment)

### [1] Entire configuration

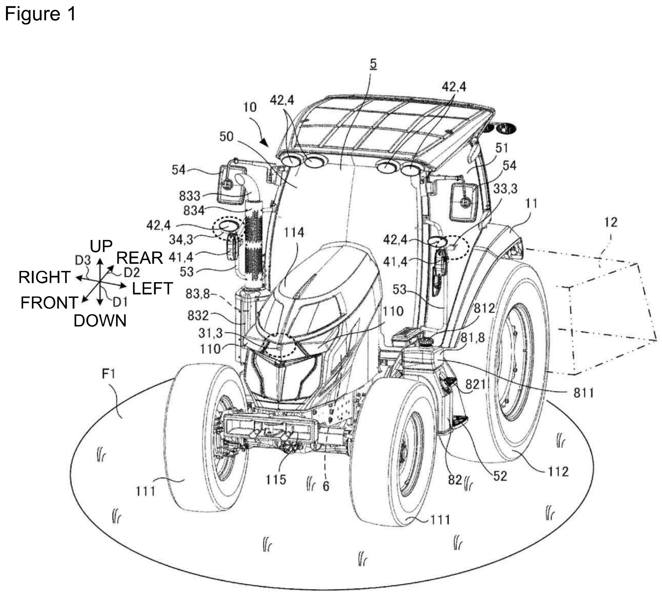

First, the entire configuration of a work vehicle 10 according to the present embodiment will be described with reference to FIGS. 1 to 9.

The work vehicle 10 includes a vehicle body 11. The vehicle body 11 is configured such that a work machine 12 (refer to FIG. 1) can be attached thereto. In FIG. 1, a schematic outline of the work machine 12 is indicated by imaginary lines (long dashed double-short dashed lines).

In the present embodiment, for convenience of description, the vertical direction when the work vehicle 10 is in a usable state is defined as an up-down direction D1 (refer to FIG. 1). A front-rear direction D2 and a left-right direction D3 are defined based on the direction as viewed from an operator seated in the vehicle body 11 (specifically, a driving section 5) of the work vehicle 10. The left side in the left-right direction D3 refers to the left side when the vehicle body 11 travels forward (advances), and the right side in the left-right direction D3 refers to the right side when the vehicle body 11 travels forward (advances). However, these directions are not intended to limit the direction of use of the work vehicle 10 (the direction when used).

The work vehicle 10 performs some work within a target area F1 using the work machine 12 while moving within the target area F1 (refer to FIG. 1). The "work" described in the present disclosure refers to work performed by the work machine 12 on the target area F1, and includes, for example, various types of work such as various types of agricultural work such as tillage, leveling, sowing, fertilizing, pesticide spraying, planting (rice planting), or harvesting, and construction work. In the present embodiment, as an example, the work performed by the work vehicle 10 is tillage work.

The work machine 12 performs work within the target area F1 while the vehicle body 11 of the work vehicle 10 moves within the target area F1. In the embodiment, as an example, the work machine 12 is a tiller that performs tillage work, such as a rotary tiller or a plow.

This type of work machine 12 includes a direct-mount work machine that is directly attached to a three-point linkage and a towed-type work machine that is towed by the vehicle body 11. In the present embodiment, as an example, the work machine 12 is a direct-mount rotary tiller that is detachably attached to the vehicle body 11 of the work vehicle 10. Here, the work machine 12 is attached to the rear side of the vehicle body 11 (the side opposite to a forward traveling direction of the vehicle body 11). That is, the (direct-mount) work machine 12 is coupled to the rear side of the vehicle body 11, and performs work while traveling forward together with the vehicle body 11 during the forward traveling of the vehicle body 11. In the present embodiment, the work machine 12 is included in the constituent elements of the work vehicle 10. However, since the work machine 12 is detachable from the vehicle body 11, the work machine 12 does not need to be included in the constituent elements of the work vehicle 10.

The "work vehicle" described in the present disclosure means, for example, a vehicle that performs various types of work in the target area F1 such as an agricultural field, and examples thereof include agricultural machines such as a tractor, a seeder, a rice transplanter, a spreader, a sprayer, a transplanter, and a harvesting machine. The work vehicle 10 may be, for example, a construction machine or the like. In the present embodiment, unless otherwise specified, an example in which the work vehicle 10 is a tractor equipped with a rotary tiller serving as the work machine 12 will be described. That is, the work vehicle 10 is configured by coupling the (direct-mount) rotary tiller serving as the work machine 12 to the tractor serving as the vehicle body 11. In the work vehicle 10, the vehicle body 11 travels within the target area F1, such as the agricultural field, which enables tillage work within the target area F1.

In this manner, in the present embodiment, the vehicle body 11 is a type of vehicle that moves by traveling within the target area F1. Here, the vehicle body 11 includes a pair of left and right front wheels 111 serving as steered wheels and a pair of left and right rear wheels 112 serving as drive wheels, and travels within the target area F1 using these four wheels (the pair of front wheels 111 and the pair of rear wheels 112).

The "target area" described in the present disclosure is the area where the work vehicle 10 performs, while moving, various types of work such as tillage, leveling, sowing, fertilizing, pesticide spraying, planting (rice planting), or harvesting, and includes a paddy field, a field, an orchard, a pasture, and the like. For example, when a paddy field or a field where crops (agricultural products) such as rice, wheat, soybeans, or buckwheat are grown is the target area F1, the crops cultivated in the target area F1 are agricultural products. Furthermore, when plants are grown in a plant nursery, the plant nursery is the target area F1, and when trees to be lumber are grown in a forest, as in forestry, the forest is the target area F1. In this case, the crops cultivated in the target area F1 are garden plants, trees, or the like. In the present embodiment, unless otherwise specified, the work vehicle 10 is used for tillage work in the agricultural field (target area F1), and a case in which the target area F1 is a paddy field for growing rice will be described as an example. In addition, the target area F1 is not limited to an agricultural field. For example, when the work vehicle 10 is a construction machine, the site where the construction machine performs work is the target area F1.

In addition, the work vehicle 10 can travel not only within the target area F1 (here, the agricultural field) but also, for example, on a road such as an off-field route outside the target area F1. The off-field route is, for example, an inter-field connecting road that connects a plurality of target areas F1 (agricultural fields). The inter-field connecting road is a farm road, a forest road, a public road, a private road, an automobile road, or the like, and may be a road dedicated for the work vehicle 10 or a road accessible to standard vehicles (e.g., passenger cars).

In the work vehicle 10 according to the present embodiment, the vehicle body 11 includes a driver's seat. The driver's seat is a place where an operator sits. Therefore, the work vehicle 10 performs work while traveling within the target area F1 by operation (manual driving) of the operator sitting in the driver's seat.

However, the work vehicle 10 is not limited to a configuration in which the work vehicle 10 travels by manual driving of an operator sitting in the driver's seat (manual traveling), and may, for example, be operable by automated traveling (e.g., autonomous traveling). Furthermore, the work vehicle 10 may be an unmanned vehicle that travels in an automated manner, or may operate by remote control by an operator.

The "automated traveling" described in the present disclosure includes "autonomous traveling" in which the work vehicle 10 autonomously travels without the operator's operation, and "semi-automated traveling" in which only steering is automated, such as straight-line assist. The "autonomous traveling" is a traveling mode in which, for example, in addition to automatic steering of the front wheels 111, the vehicle speed and the like are also automatically controlled such that the work vehicle 10 travels along a target route. The "straight-line assist" is a traveling mode in which, for example, only the front wheels 111 are automatically steered such that the work vehicle 10 travels along a straight route parallel to a straight line to be a reference (reference line), and the vehicle speed and the like are controlled by the operator's operation.

That is, in the "semi-automated traveling", although the work vehicle 10 cannot travel without the operator's operation, the operator's steering burden is reduced and the work vehicle 10 can travel along the target route such as a straight route, which leads to improvement in the work efficiency. In addition, since the front wheels 111 are automatically steered in both the autonomous traveling and the semi-automated traveling, these can be considered as one mode of an "automatic steering mode". In the automatic steering mode, the front wheels 111 are automatically steered by an automatic steering mechanism including a steering motor. That is, instead of the operator operating a steering wheel, automatic steering is achieved by changing the orientation of the front wheel 111 through an output of the steering motor.

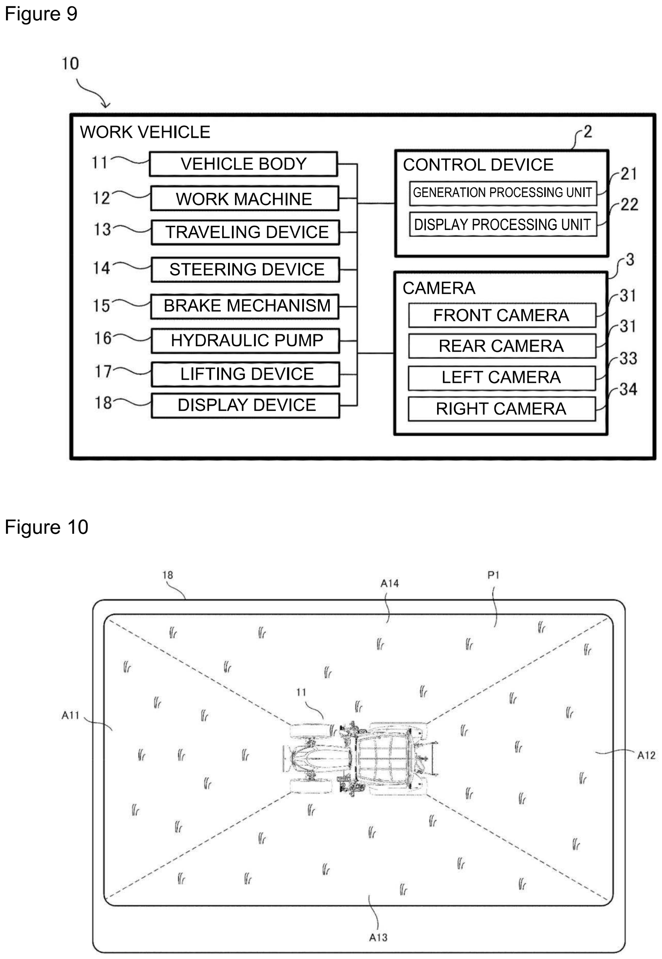

The work vehicle 10 includes a traveling device 13, a steering device 14, a brake mechanism 15, a hydraulic pump 16, a lifting device 17, a display device 18, and a control device 2 as shown in FIG. 9, in addition to the vehicle body 11 including the driving section 5, a power source 6, and the four wheels (the front wheels 111 and the rear wheels 112). In addition, the work vehicle 10 further includes a plurality of cameras 3 (a front camera 31, a rear camera 32, a left camera 33, and a right camera 34).

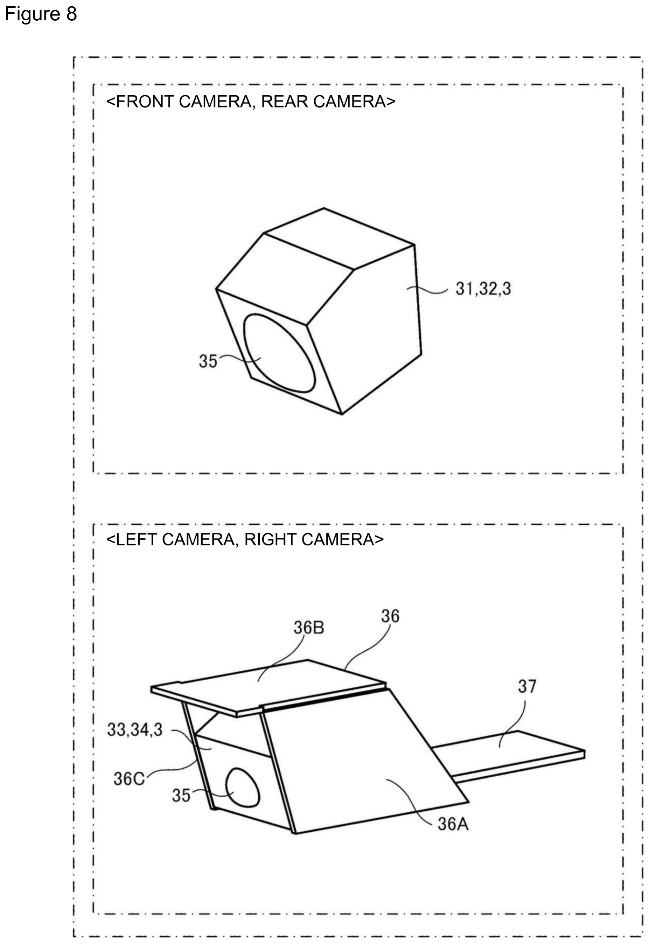

As shown in FIG. 8, each of the plurality of cameras 3 includes an image sensor such as a charge coupled device (CCD) sensor or a complementary metal oxide semiconductor (CMOS) sensor, and an optical element such as a lens 35. The lens 35 is, for example, a wide-angle lens. Each of the plurality of cameras 3 is connected to the control device 2 and outputs a captured image to the control device 2. The image captured by each of the plurality of cameras 3 is used in the control device 2 to generate a bird's-eye view image P1 (described later).

In the present embodiment, as shown in FIG. 9, the work vehicle 10 includes, as the plurality of cameras 3, the front camera 31, the rear camera 32, the left camera 33, and the right camera 34. Here, FIG. 8 shows the structure of each of the front camera 31, the rear camera 32, the left camera 33, and the right camera 34. <FRONT CAMERA, REAR CAMERA> in FIG. 8 shows the configuration of the front camera 31 and the rear camera 32, and <LEFT CAMERA, RIGHT CAMERA> in FIG. 8 shows the configuration of the left camera 33 and the right camera 34.

The front camera 31 captures an image of a front area A11 (refer to FIG. 10) around the vehicle body 11. The rear camera 32 captures an image of a rear area A12 (refer to FIG. 10) around the vehicle body 11. The left camera 33 captures an image of a left area A13 (refer to FIG. 10) around the vehicle body 11. The right camera 34 captures an image of a right area A14 (refer to FIG. 10) around the vehicle body 11.

Here, the front area A11 is a three-dimensional area located in front of the vehicle body 11 (forward of a front end portion of the vehicle body 11) in a real space around the vehicle body 11. In addition, the rear area A12 is a three-dimensional area located behind the vehicle body 11 (rearward of a rear end portion of the vehicle body 11) in the real space around the vehicle body 11. In addition, the left area A13 is a three-dimensional area located to the left of the vehicle body 11 (leftward of a left end portion of the vehicle body 11) in the real space around the vehicle body 11. In addition, the right area A14 is a three-dimensional area located to the right of the vehicle body 11 (rightward of a right end portion of the vehicle body 11) in the real space around the vehicle body 11. FIG. 10 shows the bird's-eye view image P1 displayed on the display device 18. Note that, in FIG. 10, the areas corresponding to the front area A11, the rear area A12, the left area A13, and the right area A14 within the bird's-eye view image P1 displayed on the display device 18 are denoted by the reference signs "A11" to "A14".

In the present embodiment, as shown in FIG. 8, a heat blocking cover 36 is attached to each of the left camera 33 and the right camera 34 among the plurality of cameras 3. The heat blocking cover 36 includes three plate members 36A, 36B, 36C that surround the sides and top of the camera 3, and is formed of a material having a heat blocking property. The heat blocking cover 36 is attached to the camera 3 in a manner to cover a portion of the camera 3 other than the lens 35. In other words, the work vehicle 10 includes the heat blocking cover 36 that has the heat blocking property and surrounds at least one of the plurality of cameras 3 (here, the left camera 33 and the right camera 34).

With this configuration, the heat blocking cover 36 can block heat transmitted to the camera 3. Therefore, even when the area around the camera 3 is in a relatively high temperature state, the camera 3 is less likely to become high temperature. Therefore, for example, even when the camera 3 is disposed in a location prone to relatively high temperatures, such as near an exhaust pipe of the work vehicle 10, the camera 3 is less likely to become high temperature and less likely to have an abnormality.

The driving section 5 is disposed behind the power source 6 in the vehicle body 11. In addition to the driver's seat, a steering wheel, an operation lever, a pedal, and the like are disposed in the driving section 5. The steering wheel, the operation lever, the pedal, and the like are operation portions that are operated by the operator riding in the driving section 5. The work vehicle 10 is configured to be able to manually travel by the operator manually operating these operation portions.

The types of the driving section 5 of the work vehicle 10 include a cabin type, a canopy type, a ROPS type, and the like. The driving section 5 of the cabin type includes a cabin 50, and the driver's seat is disposed in an internal space of the cabin 50. The driving section 5 of the canopy type includes a canopy (roof), and the driver's seat is disposed in a space below the canopy. The driving section 5 of the ROPS type does not include the cabin 50, the canopy, and the like, and the driver's seat is disposed in a space open upward. In the present embodiment, a case in which the driving section 5 is the cabin type including the cabin 50 will be described as an example.

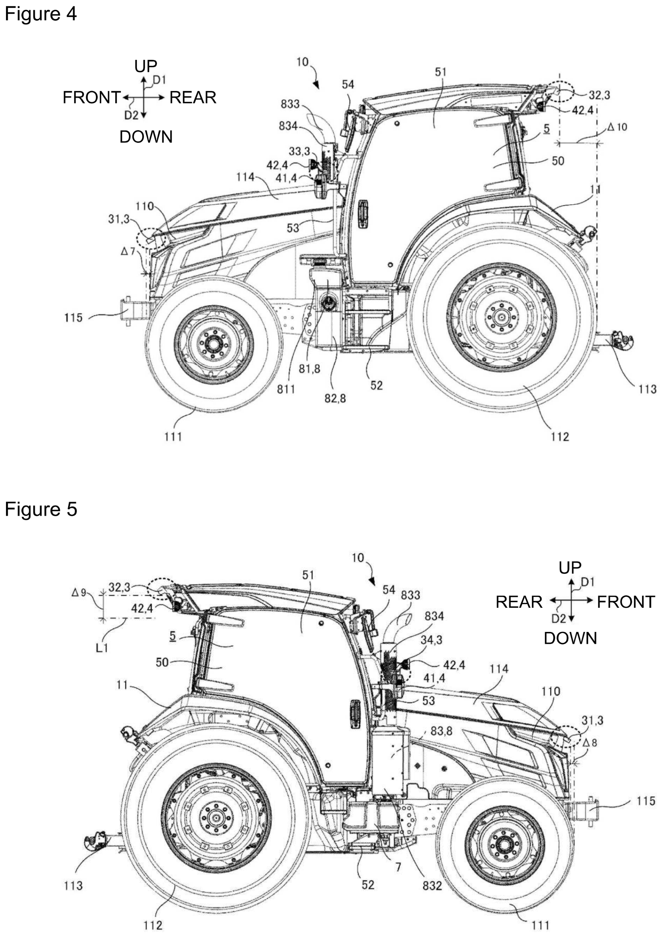

The cabin 50 includes glass panels on a front face, a rear face (back face), a left side face, and a right side face thereof. In addition, as shown in FIGS. 4 and 5, the cabin 50 includes a door 51 that can be opened and closed at least to one side in the left-right direction D3. The operator can get into and get out of the driving section 5 through the door 51. In the present embodiment, the cabin 50 includes a pair of left and right doors 51. The operator can get into and get out of the cabin 50 through the left door 51 using a left step 52 and through the right door 51 using a right step 52. Each of the left step 52 and the right step 52 is composed of a plurality of treads arranged in a stair-like configuration.

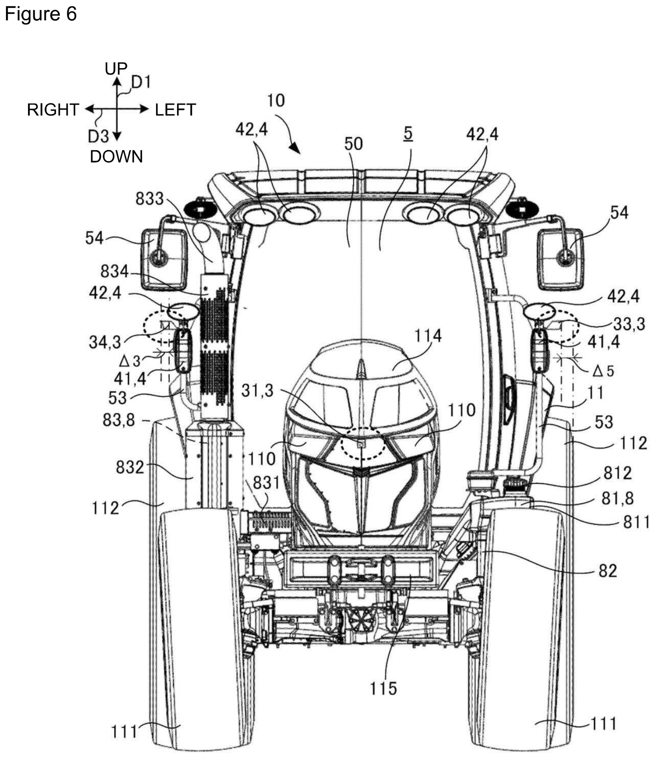

In addition, as shown in FIG. 6, the cabin 50 includes a pair of left and right handrails 53 for getting on and off. The left handrail 53 is disposed in front of the left door 51 and grasped with the operator's hand when the operator gets into or gets out of the driving section 5 using the left step 52. The right handrail 53 is disposed in front of the right door 51 and grasped with the operator's hand when the operator gets into or gets out of the driving section 5 using the right step 52. Each of the left handrail 53 and the right handrail 53 has a tubular portion elongated in the up-down direction D1, and an upper end portion and a lower end portion of the tubular portion are fixed to a frame constituting the cabin 50.

As shown in FIG. 6, the cabin 50 is equipped with a pair of left and right mirrors 54, a pair of left and right turn signals 41, and a plurality of (here, ten) work lights 42. In addition, a hood 114 located at a front portion of the vehicle body 11 is equipped with a pair of left and right headlights 110.

Each of the pair of mirrors 54 is used by the operator riding in the driving section 5 to check behind the vehicle body 11. Specifically, the left mirror 54 of the pair of mirrors 54 is mounted at an upper end portion of a front left frame of the frame constituting the cabin 50, and disposed leftward and forward of the frame with its mirror surface facing rearward. In addition, the right mirror 54 of the pair of mirrors 54 is mounted at an upper end portion of a front right frame of the frame constituting the cabin 50, and disposed rightward and forward of the frame with its mirror surface facing rearward. Each of the pair of mirrors 54 is configured to enable the orientation and position of the mirror surface to be changed by the operator operating it with his or her hand.

The pair of turn signals 41 are disposed at positions on the vehicle body 11 visually recognizable from its surroundings. The turn signals 41 are provided as a left-right pair, and have the function of notifying people around the vehicle body 11 of the turning direction of the vehicle body 11 (right turn or left turn) using their illumination (flashing). Specifically, the left turn signal 41 of the pair of turn signals 41 is mounted at a position that is slightly above an intermediate portion of the left handrail 53 in the up-down direction D1 and at a height approximately equal to an upper face of the hood 114 when viewed from the front. In addition, the right turn signal 41 of the pair of turn signals 41 is mounted at a position that is slightly above an intermediate portion of the right handrail 53 in the up-down direction D1 and at a height approximately equal to the upper face of the hood 114 when viewed from the front.

Each of the work lights 42 outputs light (e.g., white light) outward from the vehicle body 11 to illuminate the area around the vehicle body 11. Each of the work lights 42 illuminates a work object on which the work vehicle 10 performs work, thereby enabling visual check of the work object, for example, even in dark environments such as at night.

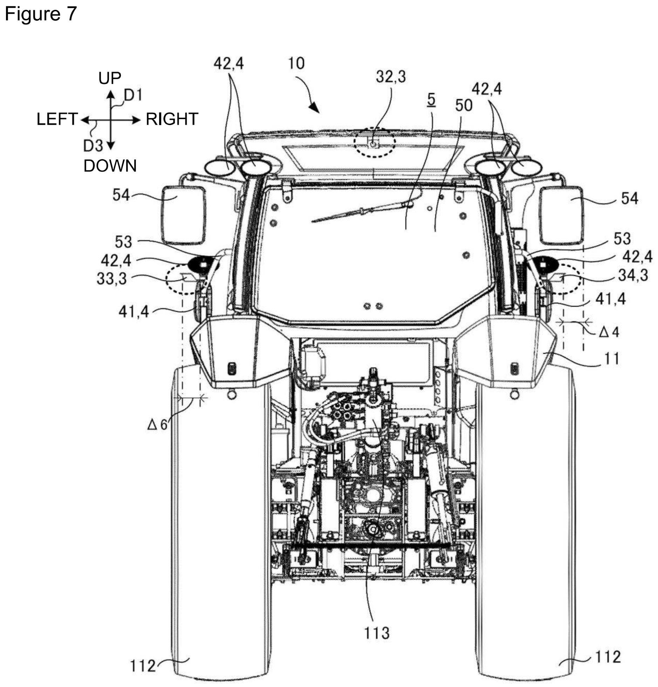

In the present embodiment, six of the ten work lights 42 are disposed at the front side of the vehicle body 11 (refer to FIG. 6), and the remaining four work lights 42 are disposed at the rear side of the vehicle body 11 (refer to FIG. 7). Each of the six front work lights 42 illuminates the area in front of the vehicle body 11. Four of the six front work lights 42 are disposed at a front end portion of a ceiling of the cabin 50. Specifically, these four work lights 42 are disposed such that two of the four work lights 42 are arranged side by side on the left side of the front end portion of the ceiling of the cabin 50 and the remaining two work lights 42 are arranged side by side on the right side thereof.

In addition, the remaining two of the six front work lights 42 are mounted, one-to-one, to the pair of left and right handrails 53 of the cabin 50. Specifically, the left work light 42 of these two work lights 42 is mounted to the left handrail 53 by being mounted at an upper end portion of the left turn signal 41 mounted to the left handrail 53. In addition, the right work light 42 of these two work lights 42 is mounted to the right handrail 53 by being mounted at an upper end portion of the right turn signal 41 mounted to the right handrail 53.

Each of the four rear work lights 42 illuminates the area behind the vehicle body 11. The four work lights 42 are disposed at a rear end portion of the ceiling of the cabin 50. Specifically, these four work lights 42 are disposed such that two of the four work lights 42 are arranged side by side on the left side of the rear end portion of the ceiling of the cabin 50 and the remaining two work lights 42 are arranged side by side on the right side thereof.

Each of the pair of headlights 110 outputs light (e.g., white light) forward from the vehicle body 11 to illuminate the area around the vehicle body 11, in particular, the area in front of the vehicle body 11. Each of the pair of headlights 110 illuminates a work object on which the work vehicle 10 performs work, thereby enabling visual check of the work object, for example, even in dark environments such as at night. As shown in FIGS. 1 and 4, the pair of headlights 110 are disposed at a front end portion of the hood 114. Specifically, the pair of headlights 110 are disposed with a predetermined distance left therebetween in the left-right direction D3 at the front end portion of the hood 114.

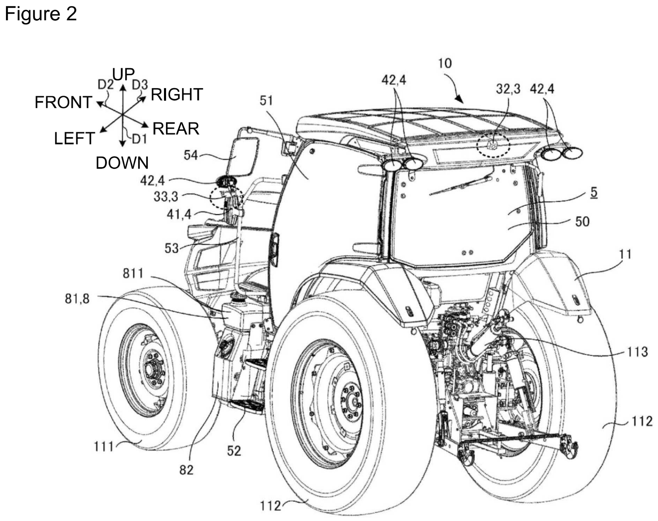

A work machine coupling portion 113 (refer to FIG. 2, etc.) that is composed of a three-point linkage mechanism or the like is provided at a rear portion of the vehicle body 11. The work machine 12 can be attached to the work machine coupling portion 113. Power generated by the power source 6 can be transmitted to the towed work machine 12 through a transmission device and a power take-off shaft (PTO shaft) disposed at the rear portion of the vehicle body 11. Here, since the work machine 12 is detachably coupled to the work machine coupling portion 113, a device other than the work machine 12 can also be coupled to the vehicle body 11.

In the present embodiment, since the work machine 12 is a direct-mount rotary tiller, tillage work can be performed on the agricultural field as the target area F1 when the vehicle body 11 travels forward. The relative position (relative height) of the work machine 12 relative to the vehicle body 11 in the up-down direction D1 is changeable. This enables the height of the work machine 12 relative to an agricultural field surface that is the ground surface of the target area F1 to be changed. For example, by raising the work machine 12 to a height away from the ground surface of the target area F1, the work vehicle 10 can also travel in a non-working state in which no work is performed by the work machine 12.

In addition, in the present embodiment, a bumper weight 115 is provided at the front portion of the vehicle body 11, as shown in FIGS. 1 and 4. The bumper weight 115 is used to adjust the center of gravity of the vehicle body 11 to an appropriate position so as to prevent the vehicle body 11 from tipping over when the work machine 12 or the like is attached to the rear portion of the vehicle body 11. A weight coupling portion to which the bumper weight 115 is detachably coupled is provided at the front and lower end portion of the hood 114 of the vehicle body 11. Therefore, the operator can attach the bumper weight 115 to the coupling portion as needed.

The lifting device 17 is a device that performs a raising and lowering operation of the work machine 12. The raising and lowering operation of the work machine 12 is an operation that changes the relative position (relative height) of the work machine 12 relative to the vehicle body 11 in the up-down direction D1. That is, the lifting device 17 raises or lowers the work machine 12 (moves the work machine 12 up or down) between a lower limit position and an upper limit position to move the work machine 12 to any height from the ground surface of the target area F1.

The traveling device 13 is a device that causes the work vehicle 10 to travel by driving the rear wheels 112 as (the pair of left and right) drive wheels. The traveling device 13 includes a transmission device, and causes the vehicle body 11 to travel forward or backward by transmitting power generated by the power source 6 to the rear wheels 112 through the transmission device. In the present embodiment, the rear wheels 112 are typical wheels, but this is not a limitation. For example, the vehicle body 11 may be a half-crawler type vehicle body 11 that adopts crawlers (tracks) for the rear wheels 112. In addition, for example, the vehicle body 11 may be a full-crawler type vehicle body 11 in which the front wheel 111 as the steered wheels and the rear wheel 112 as the drive wheels are integrated into one crawler.

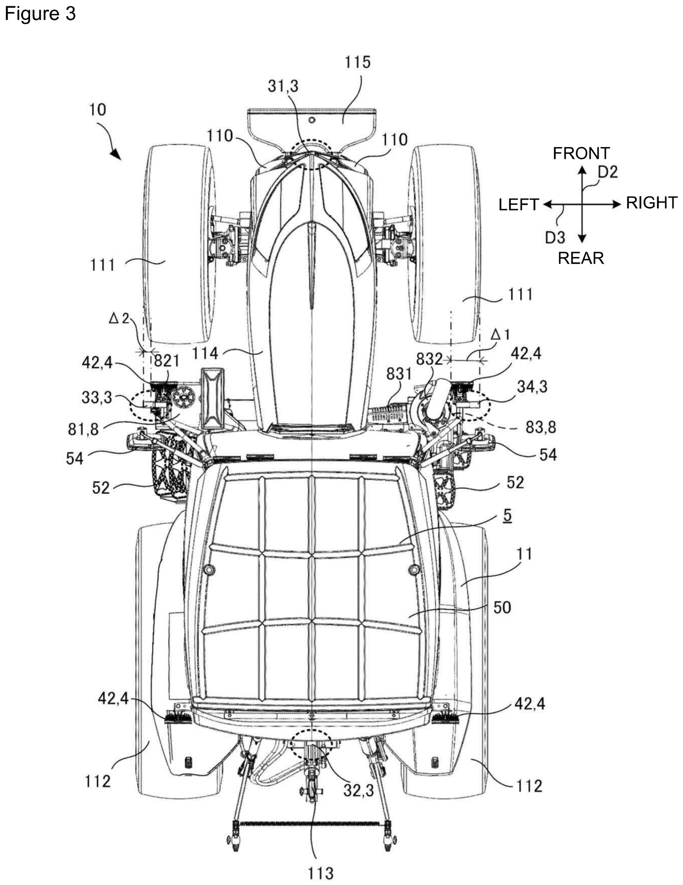

The steering device 14 is a device that steers the front wheels 111 as (the pair of left and right) steered wheels. The steering device 14 includes the steering wheel and steers the front wheels 111 in response to the operator's operation on the steering wheel. As shown in FIG. 3, in plan view, the posture of the pair of front wheels 111 facing in the front-rear direction D2, that is, the posture with their rotational axes aligned with the left-right direction D3 is defined as a reference posture, and the pair of front wheels 111 are steered to tilt leftward or rightward from the reference posture by the steering device 14. That is, the steering device 14 steers the front wheels 111 by changing the orientation of the pair of front wheels 111.

The brake mechanism 15 decelerates or stops the vehicle body 11. The brake mechanism 15 applies brakes to the pair of brake wheels (rear wheels 112) through two systems: brake pedal operation and automatic control. That is, the brake mechanism 15 decelerates or stops the traveling vehicle body 11 by applying brakes to the rear wheels 112 serving as the pair of brake wheels.

The power source 6 is a drive source that supplies power at least to the traveling device 13. The power source 6 is disposed at the front portion of the vehicle body 11 and covered with the hood 114. The power source 6 is the drive source for the work vehicle 10 and, as an example, is a diesel engine. However, the power source 6 for the work vehicle 10 is not limited to a diesel engine, and may be an engine such as a gasoline engine, an electric motor, a hybrid system combining an engine and an electric motor, or the like.

The power source 6 drives the hydraulic pump 16. That is, the hydraulic pump 16 is driven by power transmitted from the power source 6 through a power transmission mechanism. The hydraulic pump 16 supplies hydraulic oil to various hydraulic devices (such as a hydraulic cylinder and a hydraulic clutch) to operate the hydraulic devices.

The display device 18 is disposed in the driving section 5 and is a user interface for presenting information to the operator, such as a liquid crystal display or an organic EL display that displays various types of information. The display device 18 presents various types of information to the operator via its display. In the present embodiment, as an example, the display device 18 is a full-color liquid crystal display with a backlight, and has a "horizontally elongated" display area elongated in the horizontal direction.

Furthermore, the display device 18 accepts various operations by the operator, for example, by outputting electric signals corresponding to the user's (operator's) operations. This enables the user operator to visually recognize a display screen displayed on the display device 18 and also to operate the display device 18 as needed.

The control device 2 controls each part of the work vehicle 10. The control device 2 is configured to be communicable with a device provided in each part of the vehicle body 11. Here, the control device 2 may exchange various types of information (data) directly with each device or indirectly through a relay device or the like.

The control device 2 includes, as a primary configuration, a computer system including one or more processors, such as central processing units (CPUs), and one or more memories, such as a read only memory (ROM) and a random access memory (RAM), and executes various processes (information processing). In the present embodiment, the control device 2 is an integrated controller that controls the entire work vehicle 10 and is composed of, for example, an electronic control unit (ECU). However, the control device 2 may be provided separately from the integrated controller.

As shown in FIG. 9, the control device 2 includes a generation processing unit 21, and a display processing unit 22. In the present embodiment, as an example, since the control device 2 includes, as the primary configuration, the computer system including one or more processors, these functional units (such as the generation processing unit 21) are implemented by the one or more processors executing a control program. These functional units included in the control device 2 may be distributed to a plurality of housings or may be provided within a single housing.

The generation processing unit 21 generates the bird's-eye view image P1 (refer to FIG. 10) of the vehicle body 11 and the surroundings of the vehicle body 11 as viewed from above. Specifically, the generation processing unit 21 generates the bird's-eye view image P1 using images captured by the plurality of cameras 3 included in the vehicle body 11. More specifically, the generation processing unit 21 generates the bird's-eye view image P1 using an image of the front area A11, an image of the rear area A12, an image of the left area A13, and an image of the right area A14 of the vehicle body 11 captured by the plurality of cameras 3.

Hereinbelow, an example of the process of generating the bird's-eye view image P1 executed by the generation processing unit 21 will be described. First, the generation processing unit 21 executes a distortion correction process on the image captured by each of the plurality of cameras 3. That is, since each of the plurality of cameras 3 uses the lens 35 such as a wide-angle lens, distortion occurs in the captured image. Therefore, the distortion correction process corrects the distortion occurring in the image captured by each of the plurality of cameras 3. For example, the generation processing unit 21 corrects the distortion occurring in the image captured by each of the plurality of cameras 3 based on data on the optical characteristics (e.g., a distortion factor, etc.) of the lens 35 of each of the plurality of cameras 3.

Next, the generation processing unit 21 executes a transformation process that transforms the image captured by each of the plurality of cameras 3 into a planar image viewed from above the vehicle body 11. For example, the generation processing unit 21 transforms the image captured by each of the plurality of cameras 3 into the planar image viewed from above the vehicle body 11 using coordinate data of each of the plurality of cameras 3 and a three-dimensional model of the vehicle body 11.

Next, the generation processing unit 21 executes a superimposition process that superimposes the planar images corresponding to the images captured by each of the plurality of cameras 3. For example, the generation processing unit 21 places the planar images corresponding to the images captured by each of the plurality of cameras 3 on a plane centered on the vehicle body 11 and connects the overlapping portions of adjacent planar images. Specifically, in the overlapping portions between the planar image corresponding to the front area A11 of the vehicle body 11 and the planar image corresponding to the left area A13 of the vehicle body 11, the generation processing unit 21 executes a process of smoothly connecting each edge of these planar images. The generation processing unit 21 executes the same process on the other overlapping portions.

Through the series of processes described above, the generation processing unit 21 generates a superimposed image by superimposing the planar images corresponding to the images captured by each of the plurality of cameras 3. The generation processing unit 21 then generates the bird's-eye view image P1 by executing a synthesis process that synthesizes a planar image of the vehicle body 11 viewed from above onto the superimposed image. The planar image of the vehicle body 11 viewed from above is, for example, previously stored in the memory included in the control device 2.

The display processing unit 22 displays the bird's-eye view image P1 generated by the generation processing unit 21 on the display device 18. By viewing the bird's-eye view image P1 displayed on the display device 18, the operator can grasp the state of the area around the vehicle body 11. For example, by viewing the bird's-eye view image P1 displayed on the display device 18, the operator can grasp whether an obstacle is present around the vehicle body 11 or whether a footpath is present around the vehicle body 11.

In the present embodiment, the display processing unit 22 can switch a display mode of the bird's-eye view image P1 on the display device 18, for example, in response to the operator's operation. Specifically, the display processing unit 22 can switch from a display mode in which the bird's-eye view image P1 is displayed on the entire display screen of the display device 18 to a display mode in which the images captured by any one or more cameras 3 and the bird's-eye view image P1 are displayed side by side on the display screen of the display device 18. In the latter display mode, the display position of the images captured by the one or more cameras 3 and the display position of the bird's-eye view image P1 on the display screen may be appropriately changeable in response to the operator's operation.

In addition, the work vehicle 10 further includes, in addition to the above-mentioned configuration, a battery 7, a fuel tank 81, a selective catalytic reduction (SCR) case 83, a urea solution tank 82, various sensors, etc.

The battery 7, for example, supplies operating electric power to each part of the work vehicle 10, such as the control device 2. In the present embodiment, as shown in FIG. 5, the battery 7 is disposed under the right door 51 of the cabin 50 and below the bottom of the cabin 50. In addition, the battery 7 is disposed between the right front wheel 111 and the right rear wheel 112, more specifically, disposed between the right front wheel 111 and the right step 52 and close to the right step 52.

The fuel tank 81 stores fuel to be supplied to an engine. In the present embodiment, as shown in FIGS. 1, 4, and 6, the fuel tank 81 includes two tanks (a right tank (not shown) and a left tank 811) that are disposed on both the right and left sides of the cabin 50 of the driving section 5. The right tank of the fuel tank 81 is disposed on the right side of the cabin 50. The left tank 811 of the fuel tank 81 is disposed on the left side of the cabin 50. The right tank and the left tank 811 are coupled to each other through a fuel pipe below the bottom of the cabin 50. An upper portion of the left tank 811 is disposed between the left front wheel 111 and the left rear wheel 112, more specifically, disposed between the left front wheel 111 and the left step 52 and close to the left step 52. An oil supply tube 812 for supplying fuel to the fuel tank 81 is provided at the upper portion of the left tank 811. Specifically, the oil supply tube 812 is provided in a manner to protrude upward from an upper face of the upper portion of the left tank 811.

Under the upper portion of the left tank 811, the urea solution tank 82 is disposed in a manner to be aligned with the upper portion of the left tank 811 in the up-down direction D1. The urea solution tank 82 stores a urea solution for selective catalytic reduction. As with the left tank 811, the urea solution tank 82 is disposed between the left front wheel 111 and the left rear wheel 112, more specifically, disposed between the left front wheel 111 and the left step 52 and close to the left step 52. A filler tube 821 for supplying the urea solution to the urea solution tank 82 is provided at a left side portion of the urea solution tank 82. Specifically, the filler tube 821 is provided in a manner to protrude obliquely upward and outward from a left side face of the left side portion of the urea solution tank 82.

The SCR case 83 constitutes a part of an after-treatment device that removes particulate matter such as soot, nitrogen oxides (NOx), or the like contained in exhaust gas of the engine and discharges the purified exhaust gas to the outside of the vehicle body 11. The SCR case 83 stores an SCR catalyst. In addition, an exhaust-side end portion (right end portion) of a urea mixing pipe 831 (refer to FIG. 3, etc.) is coupled to a lower portion of the SCR case 83. A portion of the urea mixing pipe 831 other than the exhaust-side end portion is housed in the hood 114. In addition, the SCR case 83 is covered with a tubular cover 832.

Above the SCR case 83, as shown in FIGS. 1 and 6, a tubular tailpipe 833 having a length in the up-down direction D1 is disposed. An end portion (lower end portion) of the tailpipe 833 on the exhaust inlet side is connected to the SCR case 83 inside the cover 832. Therefore, exhaust gas flowing from the engine to the SCR case 83 is discharged to the outside of the vehicle body 11 through the tailpipe 833. In addition, the tailpipe 833 is covered with a tubular pipe cover 834 having a heat blocking property.

An injection portion that injects and thus supplies the urea solution from the urea solution tank 82 into the urea mixing pipe 831 is attached to the urea mixing pipe 831. By supplying the urea solution from the urea solution tank 82 into the urea mixing pipe 831 in this manner, the urea solution is hydrolyzed within the exhaust gas flowing from the engine to the SCR case 83 and converted into ammonia, and the converted ammonia is mixed into the exhaust gas. Then, the ammonia mixed into the exhaust gas and the nitrogen oxides (NOx) in the exhaust gas react with the SCR catalyst inside the SCR case 83 and are decomposed into nitrogen and water. This reduces the nitrogen oxides in the exhaust gas. Then, the exhaust gas with reduced nitrogen oxides is discharged to the outside of the vehicle body 11 through the tailpipe 833.

### [2] Arrangement of a plurality of cameras

Hereinbelow, the arrangement of the plurality of cameras 3 (the front camera 31, the rear camera 32, the left camera 33, and the right camera 34) that capture images used to generate the bird's-eye view image P1 in the work vehicle 10 according to the present embodiment will be described in detail.

### <Left camera and right camera>

First, the arrangement of the left camera 33 and the right camera 34 among the plurality of cameras 3 will be described. As shown in FIGS. 4 and 6, the left camera 33 is mounted at the upper end portion of the left turn signal 41 through a fixing member 37 (refer to FIG. 8) having a length in the left-right direction D3. Therefore, the left camera 33 is disposed in a manner to be located above the intermediate portion of the left handrail 53 in the up-down direction D1. Specifically, one end (right end) of the fixing member 37 is fixed to a connecting portion between the upper end portion of the left turn signal 41 and the left work light 42 that is located above the left turn signal 41. The left camera 33 is fixed to the other end (left end) of the fixing member 37 such that the central axis of the lens 35 (refer to FIG. 8) faces leftward and obliquely downward. The angle of the central axis of the lens 35 is appropriately set to an angle that enables imaging of the desired left area A13 around the vehicle body 11.

The right camera 34 is mounted at the upper end portion of the right turn signal 41 through a fixing member 37 (refer to FIG. 8) having a length in the left-right direction D3, as shown in FIGS. 4 and 6. Therefore, the right camera 34 is disposed in a manner to be located above the intermediate portion of the right handrail 53 in the up-down direction D1. Specifically, one end (left end) of the fixing member 37 is fixed to a connecting portion between the upper end portion of the right turn signal 41 and the right work light 42 that is located above the right turn signal 41. The right camera 34 is fixed to the other end (right end) of the fixing member 37 such that the central axis of the lens 35 (refer to FIG. 8) faces rightward and obliquely downward. The angle of the central axis of the lens 35 is appropriately set to an angle that enables imaging of the desired right area A14 around the vehicle body 11.

In the present embodiment, as shown in FIGS. 3 and 6, at least one of the left camera 33 and the right camera 34 is disposed outward of a storage device 8 in the left-right direction D3. Here, the storage device 8 is a device that is disposed in a manner to be exposed to the outside of the vehicle body 11. Specifically, the storage device 8 is a device that stores a material, a member, or the like related to the operation of the vehicle body 11, such as fuel or a urea solution. In the storage device 8, at least a portion of the storage device 8, such as the filler tube 821, is disposed in a manner to be exposed to the outside of the vehicle body 11 to facilitate, for example, replenishment or replacement of the material inside the device.

In the present embodiment, one or more storage devices 8 are provided, and the one or more storage devices 8 include at least one of the fuel tank 81, the SCR case 83, and the urea solution tank 82. Here, the SCR case 83 is disposed on the right side of the vehicle body 11. Specifically, the SCR case 83 is disposed offset to the right side in the width direction (left-right direction D3) of the vehicle body 11. Therefore, the right camera 34 is disposed on the right side in the width direction of the vehicle body 11 and rightward (outward in the left-right direction D3) of the SCR case 83.

Specifically, the right camera 34 is disposed such that the lens 35 is located rightward of a rightmost (outermost) end portion of the SCR case 83 when viewed from behind. Here, as shown in FIG. 3, the right camera 34 is disposed such that the lens 35 is located rightward of a rightmost end portion of the cover 832 covering the SCR case 83 by a predetermined distance Δ1 when viewed from above. In addition, as shown in FIG. 5, the right camera 34 is disposed at a position that overlaps the SCR case 83, more specifically, a position that overlaps the tailpipe 833 when viewed from the right side.

Note that a portion of the right camera 34 other than the lens 35 may be disposed at a position that overlaps the SCR case 83 when viewed from behind. In addition, the right camera 34 does not need to be disposed at the position that overlaps the SCR case 83, more specifically, the position that overlaps the tailpipe 833 when viewed from the right side. For example, the right camera 34 may be disposed in a manner to be located forward or rearward of the tailpipe 833 when viewed from the right side.

In addition, the fuel tank 81 and the urea solution tank 82 are disposed on the left side of the vehicle body 11. Specifically, the fuel tank 81 and the urea solution tank 82 are disposed offset to the left in the width direction (left-right direction D3) of the vehicle body 11. Therefore, the left camera 33 is disposed on the left side in the width direction of the vehicle body 11 and leftward (outward in the left-right direction D3) of the fuel tank 81 and the urea solution tank 82.

Specifically, the left camera 33 is disposed such that the lens 35 is located leftward of a leftmost (outermost) end portion of the fuel tank 81 and the urea solution tank 82 when viewed from behind. Here, as shown in FIG. 3, the left camera 33 is disposed such that the lens 35 is located leftward of a leftmost end portion of the filler tube 821 of the urea solution tank 82 (refer to FIG. 1) by a predetermined distance Δ2 when viewed from above. In addition, the left camera 33 is disposed at a position that overlaps the fuel tank 81 and the urea solution tank 82 when viewed from the left side.

Note that a portion of the left camera 33 other than the lens 35 may be disposed at a position that overlaps the fuel tank 81 and the urea solution tank 82 when viewed from behind. In addition, the left camera 33 does not need to be disposed at the position that overlaps the fuel tank 81 and the urea solution tank 82 when viewed from the left side. For example, the left camera 33 may be disposed in a manner to be located forward or rearward of the fuel tank 81 and the urea solution tank 82 when viewed from the left side.

Here, the operator uses the bird's-eye view image P1 displayed on the display device 18 to grasp the state of the surroundings of the vehicle body 11. When the bird's-eye view image P1 includes a planar image of the vehicle body 11 as viewed from above, it can be said that information necessary for the operator is included as information about the vehicle body 11. Therefore, when an image of a portion of the vehicle body 11 other than this planar image is captured in the bird's-eye view image P1, the bird's-eye view image P1 includes information unnecessary for the operator, which may rather make it difficult for the operator to grasp the surroundings of the vehicle body 11.

Therefore, by disposing at least one of the left camera 33 and the right camera 34 as described above, the storage device 8 is less likely to be captured within the imaging range of at least one of the left camera 33 and the right camera 34. This provides the advantage that a part unnecessary for the bird's-eye view image P1 (here, the storage device 8) is less likely to be captured by the camera 3 (here, at least one of the left camera 33 and the right camera 34). Therefore, information unnecessary for the operator is less likely to be included in the bird's-eye view image P1, thereby making it easier for the operator to grasp the surroundings of the vehicle body 11. In the present embodiment, since the storage device 8 is less likely to be captured within the imaging ranges of both the left camera 33 and the right camera 34, the unnecessary part is further less likely to be captured by the cameras 3.

In addition, in the present embodiment, as shown in FIGS. 6 and 7, at least one of the left camera 33 and the right camera 34 is disposed outward of a light emitting device 4 in the left-right direction D3. Here, the light emitting device 4 is a device that applies light to the outside of the vehicle body 11, such as the work light 42 and the turn signal 41. Here, one or more light emitting devices 4 are provided, and the one or more light emitting devices 4 include the work lights 42 on both the left and right sides and the turn signals 41 on both the left and right sides. Specifically, the right camera 34 is disposed such that the lens 35 is located rightward of a rightmost (outermost) end portion of the right work light 42 and the right turn signal 41 when viewed from behind. Here, as shown in FIG. 6, the right camera 34 is disposed such that the lens 35 is located rightward, by a predetermined distance Δ3, of a rightmost end portion of the rightmost work light 42 among the six work lights 42 disposed on the front side of the vehicle body 11. In addition, the right camera 34 is disposed at a position that overlaps the right work light 42 and the right turn signal 41 when viewed from the right side.

Note that the portion of the right camera 34 other than the lens 35 may be disposed at a position that overlaps the right work light 42 and the right turn signal 41 when viewed from behind. In addition, the right camera 34 does not need to be disposed at the position that overlaps the right work light 42 and the right turn signal 41 when viewed from the right side. For example, the right camera 34 may be disposed forward or rearward of the right work light 42 and the right turn signal 41 when viewed from the right side.

In addition, the left camera 33 is disposed such that the lens 35 is located leftward of a leftmost (outermost) end portion of the left work light 42 and the left turn signal 41 when viewed from behind. Here, as shown in FIG. 7 the left camera 33 is disposed such that the lens 35 is located leftward, by a predetermined distance (not shown), of a leftmost end portion of the leftmost work light 42 among the six work lights 42 disposed on the front side of the vehicle body 11 when viewed from behind. In addition, the left camera 33 is disposed at a position that overlaps the left work light 42 and the left turn signal 41 when viewed from the left side.

Note that the portion of the left camera 33 other than the lens 35 may be disposed at a position that overlaps the left work light 42 and the left turn signal 41 when viewed from behind. In addition, the left camera 33 does not need to be disposed at the position that overlaps the left work light 42 and the left turn signal 41 when viewed from the left side. For example, the left camera 33 may be disposed forward or rearward of the left work light 42 and the left turn signal 41 when viewed from the left side.

With this configuration, the light emitting device 4 is less likely to be captured within the imaging range of at least one of the left camera 33 and the right camera 34. This provides the advantage that a part unnecessary for the bird's-eye view image P1 (here, the light emitting device 4) is less likely to be captured by the camera 3 (here, at least one of the left camera 33 and the right camera 34). Therefore, information unnecessary for the operator is less likely to be included in the bird's-eye view image P1, thereby making it easier for the operator to grasp the surroundings of the vehicle body 11. In the present embodiment, since the light emitting device 4 is less likely to be captured within the imaging ranges of both the left camera 33 and the right camera 34, the unnecessary part is further less likely to be captured by the cameras 3.

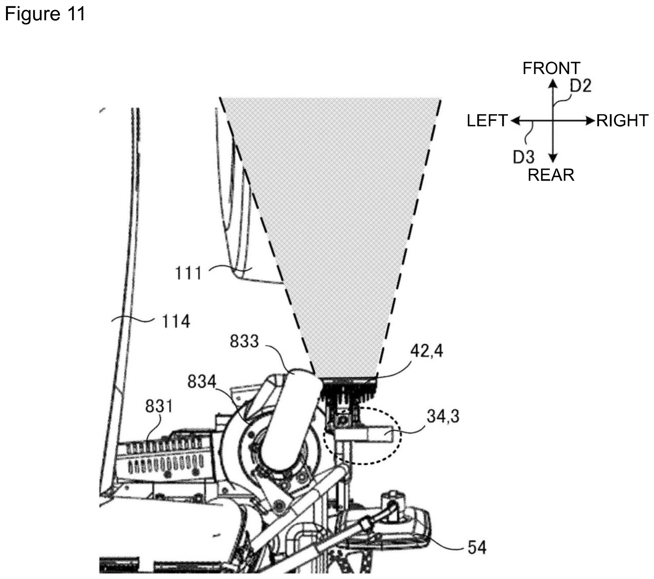

Furthermore, in the present embodiment, at least one of the left camera 33 and the right camera 34 is disposed outside a light irradiation range of the light emitting device 4. FIG. 11 virtually shows the light irradiation range of the light emitting device 4 (here, the right work light 42) in plan view. In FIG. 11, the light irradiation range of the light emitting device 4 is indicated by hatching surrounded by dashed lines. The light irradiation range of the light emitting device 4 is determined, for example, by an illuminance angle (beam angle) of a light source included in the light emitting device 4. Here, as an example, the light irradiation range of the light emitting device 4 is determined by a 1/2 illuminance angle. The 1/2 illuminance angle is the angle determined by the light source and a point group on a horizontal plane where the illuminance is 1/2 of the illuminance directly below the light source when light is applied perpendicularly to the horizontal plane from the light source. Note that the light irradiation range of the light emitting device 4 may be determined not by the 1/2 illuminance angle only, but by another illuminance angle.

Specifically, the right camera 34 is disposed such that at least the lens 35 is located outside the light irradiation range of the light emitting device 4 shown in FIG. 11. Note that, although not shown, as with the right camera 34, the left camera 33 is also disposed such that at least the lens 35 is located outside the light irradiation range of the light emitting device 4.

This configuration provides the advantage that since light from the light emitting device 4 is less likely to be applied to at least one of the left camera 33 and the right camera 34, the brightness of the captured image is less likely to become nonuniform, and furthermore, the brightness of the bird's-eye view image P1 is less likely to become nonuniform. Therefore, compared to a case in which the brightness of the bird's-eye view image P1 is nonuniform, the visibility of the bird's-eye view image P1 is improved, thereby making it easier for the operator to grasp the surroundings of the vehicle body 11. In the present embodiment, since light from the light emitting device 4 is less likely to be applied to both the left camera 33 and the right camera 34, the visibility of the bird's-eye view image P1 is likely to be further improved.

In addition, in the present embodiment, as shown in FIGS. 6 and 7, at least one of the left camera 33 and the right camera 34 is disposed inward in the left-right direction D3 of an outer end portion of the mirror 54 that is disposed in a manner to be exposed to the outside of the vehicle body 11. Here, one or more mirrors 54 are provided, and the one or more mirrors 54 include the mirrors 54 on both the left and right sides. Specifically, as shown in FIG. 7, the right camera 34 is disposed such that the lens 35 is located leftward of a rightmost (outermost) end portion of the right mirror 54 by a predetermined distance Δ4 when viewed from behind. In addition, the right camera 34 is disposed forward of the right mirror 54 when viewed from the right side.

Note that the portion of the right camera 34 other than the lens 35 may be disposed at a position that overlaps the right mirror 54 when viewed from behind. In addition, the right camera 34 does not need to be disposed at a position that overlaps the right mirror 54 when viewed from the right side. For example, the right camera 34 may be disposed forward or rearward of the right mirror 54 when viewed from the right side.

In addition, as shown in FIG. 7, the left camera 33 is disposed such that the lens 35 is located rightward of a leftmost (outermost) end portion of the left mirror 54 by a predetermined distance (not shown) when viewed from behind. In addition, the left camera 33 is disposed forward of the left mirror 54 when viewed from the left side.

Note that the portion of the left camera 33 other than the lens 35 may be disposed at a position that overlaps the left mirror 54 when viewed from behind. In addition, the left camera 33 does not need to be disposed at a position that overlaps the left mirror 54 when viewed from the left side. For example, the left camera 33 may be disposed forward or rearward of the left mirror 54 when viewed from the left side.

With this configuration, at least one of the left camera 33 and the right camera 34 is disposed inward of the mirror 54 that may be located at the outermost position of the work vehicle 10 in the left-right direction D3. This provides the advantage of making it easier to avoid the at least one camera colliding with objects around the work vehicle 10 in the left-right direction D3. In the present embodiment, since both the left camera 33 and the right camera 34 are disposed inward of the mirrors 54 in the left-right direction D3, it is further easier to avoid these cameras colliding with objects around the work vehicle 10 in the left-right direction D3.

In addition, in the present embodiment, as shown in FIGS. 6 and 7, at least one of the left camera 33 and the right camera 34 is disposed inward of an outer end portion of the wheel (the pair of front wheels 111 and the pair of rear wheels 112) of the vehicle body 11 in the left-right direction D3. Here, one or more wheels are provided, and the one or more wheels include the two front wheels 111 and the two rear wheels 112. Specifically, the right camera 34 is disposed such that the lens 35 is located leftward of an rightmost (outermost) end portion of the right front wheel 111 and the right rear wheel 112 when viewed from behind. Here, as shown in FIG. 7, the right camera 34 is disposed such that the lens 35 is located leftward of the rightmost end portion of the right rear wheel 112 by a predetermined distance (not shown) when viewed from behind. In addition, the right camera 34 is disposed rearward of the right front wheel 111 and forward of the right rear wheel 112 when viewed from the right side.

Note that the portion of the right camera 34 other than the lens 35 may be disposed in a manner to overlap the right front wheel 111 and the right rear wheel 112 when viewed from behind. In addition, the right camera 34 does not need to be disposed rearward of the right front wheel 111 and forward of the right rear wheel 112 when viewed from the right side. For example, the right camera 34 may be disposed at a position that overlaps the right front wheel 111 or a position that overlaps the right rear wheel 112 when viewed from the right side.

In addition, the left camera 33 is disposed such that the lens 35 is located rightward of a leftmost (outermost) end portion of the left front wheel 111 and the left rear wheel 112 when viewed from behind. Here, as shown in FIG. 6, the left camera 33 is disposed such that the lens 35 is located rightward of the leftmost end portion of the left rear wheel 112 by a predetermined distance Δ5. In addition, the left camera 33 is disposed rearward of the left front wheel 111 and forward of the left rear wheel 112 when viewed from the left side.

Note that the portion of the left camera 33 other than the lens 35 may be disposed in a manner to overlap the left front wheel 111 and the left rear wheel 112 when viewed from behind. In addition, the left camera 33 does not need to be disposed rearward of the left front wheel 111 and forward of the left rear wheel 112 when viewed from the left side. For example, the left camera 33 may be disposed at a position that overlaps the left front wheel 111 or a position that overlaps the left rear wheel 112 when viewed from the left side.

With this configuration, at least one of the left camera 33 and the right camera 34 is disposed inward of the wheel that may be located at the outermost position of the work vehicle 10 in the left-right direction D3. This provides the advantage of making it easier to avoid the at least one camera colliding with objects around the work vehicle 10 in the left-right direction D3. In the present embodiment, since both the left camera 33 and the right camera 34 are disposed inward of the wheels in the left-right direction D3, it is further easier to avoid these cameras colliding with objects around the work vehicle 10 in the left-right direction D3.

In addition, in the present embodiment, as shown in FIGS. 6 and 7, at least one of the left camera 33 and the right camera 34 is disposed outward in the left-right direction D3 of an outer end portion of the handrail 53 for getting into or getting out of the cabin 50 of the vehicle body 11. Here, one or more handrails 53 are provided, and the one or more handrails 53 include the handrails 53 on both the left and right sides. Specifically, as shown in FIG. 7, the right camera 34 is disposed such that the lens 35 is located rightward of a rightmost (outermost) end portion of the right handrail 53 by a predetermined distance (not shown) when viewed from behind. In addition, the right camera 34 is disposed forward of the right handrail 53 when viewed from the right side.

Note that the portion of the right camera 34 other than the lens 35 may be disposed at a position that overlaps the right handrail 53 when viewed from behind. In addition, the right camera 34 does not need to be disposed forward of the right handrail 53 when viewed from the right side. For example, the right camera 34 may be disposed at a position that overlaps the right handrail 53 or rearward of the right handrail 53 when viewed from the right side.

As shown in FIG. 7, the left camera 33 is disposed such that the lens 35 is located leftward of a leftmost (outermost) end portion of the left handrail 53 by a predetermined distance Δ6 when viewed from behind. In addition, the left camera 33 is disposed forward of the left handrail 53 when viewed from the left side.

Note that the portion of the left camera 33 other than the lens 35 may be disposed at a position that overlaps the left handrail 53 when viewed from behind. In addition, the left camera 33 does not need to be disposed forward of the left handrail 53 when viewed from the left side. For example, the left camera 33 may be disposed at a position that overlaps the left handrail 53 or rearward of the left handrail 53 when viewed from the left side.

With this configuration, the handrail 53 is less likely to be captured within the imaging range of at least one of the left camera 33 and the right camera 34. This provides the advantage that a part unnecessary for the bird's-eye view image P1 (here, the handrail 53) is less likely to be captured by the camera 3 (here, at least one of the left camera 33 and the right camera 34). Therefore, information unnecessary for the operator is less likely to be included in the bird's-eye view image P1, thereby making it easier for the operator to grasp the surroundings of the vehicle body 11. In the present embodiment, since the handrails 53 are less likely to be captured within the imaging ranges of both the left camera 33 and the right camera 34, the unnecessary part is further less likely to be captured by the cameras 3.

Note that at least one of the left camera 33 and the right camera 34 may be disposed outward of the step 52 in the left-right direction D3. Specifically, the left camera 33 may be disposed such that the lens 35 is located leftward of a leftmost (outermost) end portion of the left step 52 when viewed from behind. In addition, the right camera 34 may be disposed such that the lens 35 is located rightward of a rightmost (outermost) end portion of the right step 52 when viewed from behind.

With this configuration, the step 52 is less likely to be captured within the imaging range of at least one of the left camera 33 and the right camera 34. This provides the advantage that a part unnecessary for the bird's-eye view image P1 (here, the step 52) is less likely to be captured by the camera 3 (here, at least one of the left camera 33 and the right camera 34). Therefore, information unnecessary for the operator is less likely to be included in the bird's-eye view image P1, thereby making it easier for the operator to grasp the surroundings of the vehicle body 11.

In addition, in the present embodiment, as shown in FIGS. 6 and 7, the left camera 33 and the right camera 34 are disposed at the same position in at least one of the front-rear direction D2 and the up-down direction D1. Here, the "same position" may include not only a position where the left camera 33 and the right camera 34 completely overlap each other when viewed from one direction, but also a position where the left camera 33 and the right camera 34 at least partially overlap each other when viewed from one direction. Specifically, the left camera 33 and the right camera 34 are disposed in a manner to at least partially overlap each other when viewed from the right side or the left side.

This configuration makes it possible to generate the bird's-eye view image P1 without performing additional correction on any one of the image captured by the left camera 33 and the image captured by the right camera 34.

For example, it is assumed that the left camera 33 and the right camera 34 are disposed at different positions in the front-rear direction D2. In this case, when an image of the same object present around the vehicle body 11 is captured by each of the left camera 33 and the right camera 34, the appearance of the object in the image captured by the left camera 33 differs from the appearance of the object in the image captured by the right camera 34. The "appearance" described here may include, for example, the area occupied by the object in the captured image, the angle of the object in the captured image, or the like. In this case, when the bird's-eye view image P1 is generated based on these captured images without performing additional correction to eliminate the difference, the difference is reflected in the bird's-eye view image P1, and the operator may feel discomfort when viewing the bird's-eye view image P1.

On the other hand, with the above configuration, when an image of the same object present around the vehicle body 11 is captured by each of the left camera 33 and the right camera 34, a difference in the appearance of the object is less likely to occur between the image captured by the left camera 33 and the image captured by the right camera 34. Therefore, it is possible to generate the bird's-eye view image P1 that is less likely to cause discomfort to the operator when viewing the bird's-eye view image P1, without performing additional correction to eliminate the difference.

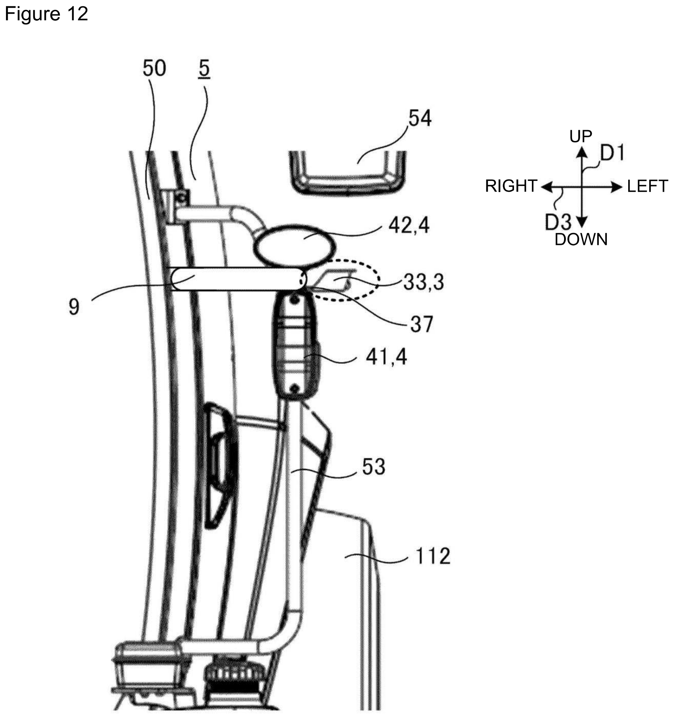

Incidentally, each of the left camera 33 and the right camera 34 may be supported by a support member 9 that supports the light emitting device 4, for example, as shown in FIG. 12. The support member 9 may be supported by the cabin of the vehicle body 11. Note that FIG. 12 shows the configuration for the left camera 33 and the left light emitting device 4. The configuration for the right camera 34 and the right light emitting device 4 is similar to the configuration shown in FIG. 12 and is thus not shown here.

Specifically, the support member 9 is a member that has a length in the left-right direction D3 and has a thickness in the up-down direction D1, and one end (rear end) thereof in the length direction is fixed to the cabin 50. In addition, the light emitting device 4 (in FIG. 12, the left work light 42 and the left turn signal 41) is fixed to the other end (front end) of the support member 9 in the length direction. In addition, one end (in FIG. 12, the right end) of the fixing member 37 having a length in the left-right direction D3 is fixed to the other end of the support member 9. The camera 3 (in FIG. 12, the left camera 33) is fixed to the other end (in FIG. 12, the left end) of the fixing member 37.

Since this configuration enables the left camera 33 and the right camera 34 to be supported using the support members 9 for supporting the light emitting devices 4, it is possible to eliminate the necessity of additionally preparing members for supporting the cameras and reduce the number of parts. In addition, with this configuration, since the left camera 33 and the right camera 34 are fixed to the cabin 50 through the support members 9, it is easier to firmly support the left camera 33 and the right camera 34 compared to a case in which the left camera 33 and the right camera 34 are supported at sites other than the cabin 50.

### <Front camera and rear camera>

Next, the arrangement of the front camera 31 and the rear camera 32 among the plurality of cameras 3 will be described. As shown in FIGS. 1, and 3 to 6, the front camera 31 is mounted at the front end portion of the hood 114. Specifically, the front camera 31 is fixed at a central portion in the left-right direction D3 of the front end portion of the hood 114, with the central axis of the lens 35 (refer to FIG. 8) facing forward and obliquely downward. The angle of the central axis of the lens 35 is appropriately set to an angle that enables imaging of the desired front area A11 around the vehicle body 11.

The rear camera 32 is mounted at the rear end portion of the ceiling of the cabin 50, as shown in FIGS. 2 to 5 and 7. Specifically, the rear camera 32 is fixed at a central portion in the left-right direction D3 of the front end portion of the ceiling of the cabin 50, with the central axis of the lens 35 (refer to FIG. 8) facing rearward and obliquely downward. The angle of the central axis of the lens 35 is appropriately set to an angle that enables imaging of the desired rear area A12 around the vehicle body 11.

In the present embodiment, the front camera 31 and the rear camera 32 are disposed such that the area of the front area A11 is equal to the area of the rear area A12 in the bird's-eye view image P1. Note that the front camera 31 and the rear camera 32 may be disposed such that the area of the front area A11 is larger than the area of the rear area A12 in the bird's-eye view image P1. In addition, the front camera 31 and the rear camera 32 may be disposed such that the area of the front area A11 is smaller than the area of the rear area A12 in the bird's-eye view image P1.

In the present embodiment, as shown in FIGS. 4 to 6, the front camera 31 that captures an image of the area in front of the vehicle body 11 among the plurality of cameras 3 is disposed at the front end portion of the hood 114 of the vehicle body 11. Specifically, the front camera 31 is disposed above the center in the up-down direction D1 at the front end portion of the hood 114. That is, as shown in FIG. 4, the front camera 31 is disposed such that the lens 35 is located forward of the forwardmost end portion of the vehicle body 11 (when the bumper weight 115 is provided, the bumper weight 115 is excluded) by a predetermined distance Δ7 when viewed from the left side or the right side. Note that a portion of the front camera 31 other than the lens 35 may be disposed at a position that overlaps the hood 114 when viewed from the left side or the right side.

With this configuration, the front end portion of the vehicle body 11 is less likely to be captured within the imaging range of the front camera 31. This provides the advantage that a part unnecessary for the bird's-eye view image P1 (here, the front end portion of the hood 114) is less likely to be captured by the camera 3 (here, the front camera 31). Therefore, information unnecessary for the operator is less likely to be included in the bird's-eye view image P1, thereby making it easier for the operator to grasp the surroundings of the vehicle body 11. In addition, with this configuration, since the front end portion of the hood 114 is less likely to be captured within the imaging range of the front camera 31, it is easier to ensure a sufficiently wide imaging range for the front camera 31.

Note that when the vehicle body 11 includes the bumper weight 115, the front camera 31 may be disposed on the bumper weight 115. This configuration provides the advantage that the bumper weight 115 is less likely to be captured within the imaging range of the front camera 31 and a part unnecessary for the bird's-eye view image P1 (here, the bumper weight 115) is less likely to be captured by the camera 3 (here, the front camera 31).

In addition, in the present embodiment, as shown in FIGS. 4 and 5, the front camera 31 that captures an image of the area in front of the vehicle body 11 (the front area A11) among the plurality of cameras 3 is disposed rearward of a front end portion of the front wheel 111 of the vehicle body 11. Specifically, as shown in FIG. 5, the front camera 31 is disposed such that the lens 35 is located rearward of a forwardmost end portion of the two front wheels 111 by a predetermined distance Δ8 when viewed from the left side or the right side. Note that the portion of the front camera 31 other than the lens 35 may be disposed at a position that overlaps the two front wheels 111 when viewed from the left side or the right side.

With this configuration, the front camera 31 is disposed rearward of the front wheel 111 that may be located at the outermost position of the work vehicle 10 in the front-rear direction D2, excluding the bumper weight 115. This provides the advantage of making it easier to avoid the front camera 31 colliding with objects around the work vehicle 10 in the front-rear direction D2.

In addition, in the present embodiment, as shown in FIG. 6, the front camera 31 that captures an image of the area in front of the vehicle body 11 among the plurality of cameras 3 is disposed within the range of the height of the headlights 110 of the vehicle body 11 in the up-down direction D1. Specifically, the front camera 31 is disposed in a manner to fall within the range between an uppermost end portion and a lowermost end portion of the pair of left and right headlights 110, when viewed from the left side or the right side. Note that it is only required that the front camera 31 falls within the above range at least in part, and the front camera 31 does not need to fall within the above range in whole.

With this configuration, the front camera 31 can be disposed at the highest possible position at the front end portion of the vehicle body 11. This provides the advantage that, for example, even when soil from the agricultural field is scattered during work of the work vehicle 10, the soil is less likely to adhere to the front camera 31. Therefore, during the work of the work vehicle 10, soil adhering to the front camera 31 is less likely to be included in the bird's-eye view image P1, thereby making it easier for the operator to grasp the surroundings of the vehicle body 11.

In addition, in the present embodiment, as shown in FIG. 6, the front camera 31 that captures an image of the area in front of the vehicle body 11 among the plurality of cameras 3 is disposed between the pair of left and right headlights 110 of the vehicle body 11. Specifically, the front camera 31 is disposed between a rightmost end portion of the left headlight 110 and a leftmost end portion of the right headlight 110 in the left-right direction D3.

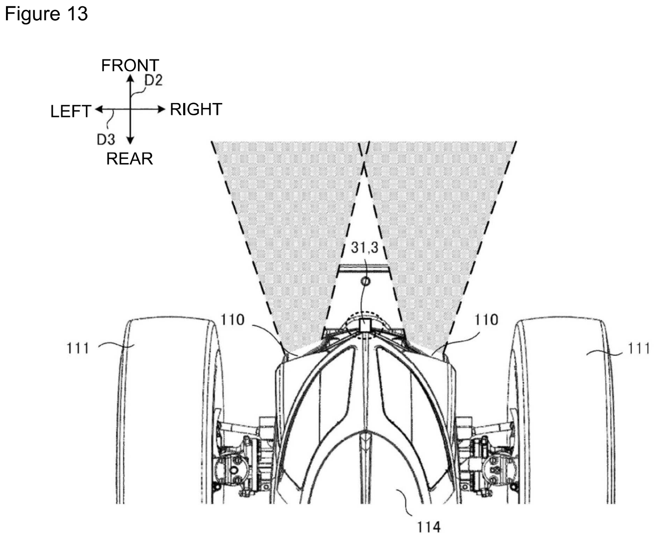

FIG. 13 virtually shows the light irradiation ranges of the two headlights 110 in plan view. In FIG. 13, the light irradiation ranges of the two headlights 110 are indicated by hatching surrounded by dashed lines. The light irradiation range of each of the two headlights 110 is determined, for example, by an illuminance angle (beam angle) of a light source included in each of the two headlights 110. Here, as an example, the light irradiation range of each of the two headlights 110 is determined by a 1/2 illuminance angle. Note that the light irradiation range of each of the two headlights 110 may be determined not by the 1/2 illuminance angle only, but by another illuminance angle. Furthermore, the front camera 31 is disposed such that at least the lens 35 is located outside the light irradiation range of each of the two headlights 110 shown in FIG. 13.

This configuration provides the advantage that since light from each of the two headlights is less likely to be applied to the front camera 31, the brightness of the captured image is less likely to become nonuniform, and furthermore, the brightness of the bird's-eye view image P1 is less likely to become nonuniform. Therefore, compared to a case in which the brightness of the bird's-eye view image P1 is nonuniform, the visibility of the bird's-eye view image P1 is improved, thereby making it easier for the operator to grasp the surroundings of the vehicle body 11.

In addition, in the present embodiment, the rear camera 32 that captures an image of the area behind the vehicle body 11 (the rear area A12) among the plurality of cameras 3 is disposed above the work machine 12 when the work machine 12 is attached to the vehicle body 11. Specifically, as shown in FIGS. 4, 5, and 7, the rear camera 32 is disposed at an uppermost end portion of the cabin 50 in the up-down direction D1, that is, the ceiling of the cabin 50. As shown in FIG. 5, even when the work machine 12 is attached to the vehicle body 11 and the work machine 12 is at its highest raised position, the ceiling of the cabin 50 is located above the work machine 12. A long dashed short dashed line L1 in FIG. 5 indicates an upper end portion of the work machine 12 when the work machine 12 is at its highest raised position. Therefore, as shown in FIG. 5, the rear camera 32 is disposed above the upper end portion of the work machine 12 by a predetermined distance Δ9 or more, regardless of the raised or lowered state of the work machine 12.

With this configuration, the work machine 12 is less likely to be captured within the imaging range of the rear camera 32. This provides the advantage that a part unnecessary for the bird's-eye view image P1 (here, the work machine 12) is less likely to be captured by the camera 3 (here, the rear camera 32). Therefore, information unnecessary for the operator is less likely to be included in the bird's-eye view image P1, thereby making it easier for the operator to grasp the surroundings of the vehicle body 11. In addition, with this configuration, since the work machine 12 is less likely to be captured within the imaging range of the rear camera 32, it is easier to ensure a sufficiently wide imaging range for the rear camera 32.

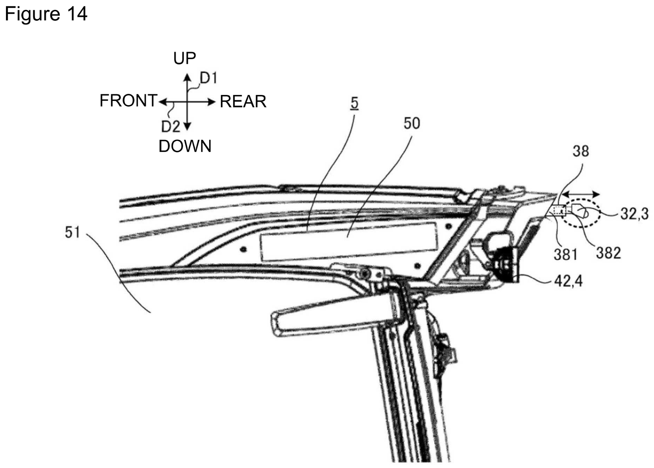

In addition, in the present embodiment, the rear camera 32 that captures an image of the area behind the vehicle body 11 among the plurality of cameras 3 may be changeable in its disposed position depending on the work machine 12 to be attached to the vehicle body 11. Specifically, for example, as shown in FIG. 14, the rear camera 32 may be mounted to the ceiling of the cabin 50 through a mounting member 38 that is extendable and retractable in the front-rear direction D2. The mounting member 38 includes a tubular portion 381 mounted to the rear end portion of the ceiling of the cabin 50 and a mounting bar 382 movable in the front-rear direction D2 inside the tubular portion 381. The rear camera 32 is mounted at a front end portion of the mounting bar 382.

With this configuration, for example, the operator can change the position of the rear camera 32 in the front-rear direction D2 depending on the type of the work machine 12 to be attached to the vehicle body 11 by operating the mounting member 38 to change the length of the mounting member 38 in the front-rear direction D2, that is, the protruding length of the mounting bar 382 from the tubular portion 381.

This configuration provides the advantage that changing the disposed position of the rear camera 32 depending on the work machine 12 enables the work machine 12 to be less likely to be captured within the imaging range of the rear camera 32, regardless of the type of the work machine 12. For example, when the length of the work machine 12 in the front-rear direction D2 is relatively long, by changing the position of the rear camera 32 further rearward from the ceiling of the cabin 50, the work machine 12 becomes less likely to be captured within the imaging range of the rear camera 32.

Note that the mounting member 38 may be extendable and retractable not only in the front-rear direction D2 but also in the left-right direction D3. In this case, for example, the operator can change the position of the rear camera 32 in the left-right direction D3 depending on the type of the work machine 12 to be attached to the vehicle body 11 by operating the mounting member 38 to change the length of the mounting member 38 in the left-right direction D3. In addition, the mounting member 38 may be changeable in its mounting angle. In this case, for example, the operator can change the angle at which the lens 35 of the rear camera 32 faces depending on the type of the work machine 12 to be attached to the vehicle body 11 by operating the mounting member 38 to change the mounting angle of the mounting member 38.

In addition, the mounting member 38 does not need to be a member that is extendable and retractable in any direction. For example, the mounting member 38 may be a member having a plurality of mounting holes capable of mounting the rear camera 32. In this case, for example, the operator can change the position of the rear camera 32 depending on the type of the work machine 12 by attaching the rear camera 32 to any one of the mounting holes.

Here, in the case of the configuration in which the rear camera 32 is changeable in its disposed position, the generation processing unit 21 may execute a distortion correction process corresponding to the disposed position of the rear camera 32. That is, the distortion that occurs in the image captured by the rear camera 32 may vary depending on the disposed position of the rear camera 32. In this case, if the same distortion correction process is executed on the image captured by the rear camera 32 regardless of the disposed position of the rear camera 32, the distortion may not be corrected appropriately. Therefore, by changing the details of the distortion correction process in accordance with the disposed position of the rear camera 32, the generation processing unit 21 facilitates appropriate distortion correction regardless of the disposed position of the rear camera 32. For example, the generation processing unit 21 executes a first distortion correction process when the rear camera 32 is disposed at a first position and executes a second distortion correction process when the rear camera 32 is disposed at a second position.

In addition, in the present embodiment, as shown in FIGS. 4 and 5, the rear camera 32 that captures an image of the area behind the vehicle body 11 among the plurality of cameras is disposed forward of a rear end portion of the rear wheel 112 of the vehicle body 11. Specifically, as shown in FIG. 4, the rear camera 32 is disposed such that the lens 35 is located forward of a rearwardmost end portion of the two rear wheels 112 by a predetermined distance Δ10 when viewed from the left side or the right side. Note that a portion of the rear camera 32 other than the lens 35 may be disposed at a position that overlaps the two rear wheels 112 when viewed from the left side or the right side.

With this configuration, except when the vehicle body 11 is equipped with the work machine 12, the rear camera 32 is disposed forward of the rear wheel 112 that may be located at the outermost position of the work vehicle 10 in the front-rear direction D2. This provides the advantage of making it easier to avoid the rear camera 32 colliding with objects around the work vehicle 10 in the front-rear direction D2.

### [3] Modifications

Hereinbelow, modifications of the first embodiment will be listed. The modifications described below are applicable in any appropriate combination.

In the above first embodiment, "A is located outward of B in the left-right direction" includes, for example, in the left-right direction D3, the outermost end portion of A being located outward of the outermost end portion of B, and may also include the innermost end portion of A being located outward of the outermost end portion of B. In addition, "A is located outward of B in the left-right direction" may include, for example, in left-right direction D3, the center of A being located outward of the center of B.

In addition, "A is located inward of B in the left-right direction" includes, for example, in the left-right direction D3, the outermost end portion of A being located inward of the outermost end portion of B, and may also include the outermost end portion of A being located inward of the innermost end portion of B. In addition, "A is located inward of B in the left-right direction" may include, for example, in the left-right direction D3, the center of A being located inward of the center of B.

Note that "A" is, for example, the left camera 33, the right camera 34, or the like. In addition, "B" is, for example, the storage device 8, the light emitting device 4, or the like.

In addition, in the above first embodiment, "C is located forward of D" includes, for example, in the front-rear direction D2, the forwardmost end portion of A being located forward of the forwardmost end portion of B, and may also include the rearwardmost end portion of A being located forward of the forwardmost end portion of B. In addition, "C is located forward of D" may include, for example, in the front-rear direction D2, the center of A being located forward of the center of B.

In addition, in the above first embodiment, "C is located rearward of D" includes, for example, in the front-rear direction D2, the rearwardmost end portion of A being located rearward of the rearwardmost end portion of B, and may also include the forwardmost end portion of A being located rearward of the rearwardmost end portion of B. In addition, "C is located rearward of D" may include, for example, in the front-rear direction D2, the center of A being located rearward of the center of B.

Note that "C" is, for example, the front camera 31, the rear camera 32, or the like. In addition, "D" is, for example, the front end portion of the hood 114, the rear end portion of the rear wheel 112, or the like.

In the above first embodiment, the right camera 34 may be disposed inward (leftward) of the SCR case 83 in the left-right direction D3, for example, when it is allowable for the SCR case 83 to be captured within the imaging range. Specifically, the right camera 34 may be disposed such that the lens 35 is located leftward of the rightmost (outermost) end portion of the SCR case 83 when viewed from behind.

In addition, in the above first embodiment, the left camera 33 may be disposed inward (rightward) of at least one of the fuel tank 81 and the urea solution tank 82 in the left-right direction D3, for example, when it is allowable for the fuel tank 81 and the urea solution tank 82 to be captured within the imaging range. Specifically, the left camera 33 may be disposed such that the lens 35 is located rightward of the leftmost (outermost) end portion of at least one of the fuel tank 81 and the urea solution tank 82 when viewed from behind.

In addition, in the above first embodiment, at least one of the left camera 33 and the right camera 34 may be disposed outward of the mirror 54 in the left-right direction D3, for example, when no object that may interfere with the camera is present around the vehicle body 11. Specifically, the left camera 33 may be disposed such that the lens 35 is located leftward of the leftmost (outermost) end portion of the left mirror 54 when viewed from behind. In addition, the right camera 34 may be disposed such that the lens 35 is located rightward of the rightmost (outermost) end portion of the right mirror 54 when viewed from behind.

In addition, in the above embodiment, at least one of the left camera 33 and the right camera 34 may be disposed inward of the light emitting device 4 in the left-right direction D3, for example, when it is allowable for the light emitting device 4 to be captured within the imaging range. Specifically, the left camera 33 may be disposed such that the lens 35 is located rightward of the leftmost (outermost) end portion of the left work light 42 and the left turn signal 41 when viewed from behind. In addition, the right camera 34 may be disposed such that the lens 35 is located leftward of the rightmost (outermost) end portion of the right work light 42 and the right turn signal 41 when viewed from behind.

In addition, in the above first embodiment, at least one of the left camera 33 and the right camera 34 may be disposed outward of the front wheel 111 and rear wheel 112 in the left-right direction D3, for example, when no object that may interfere with the camera is present around the vehicle body 11. Specifically, the left camera 33 may be disposed such that the lens 35 is located leftward of the leftmost (outermost) end portion of the left front wheel 111 and the left rear wheel 112 when viewed from behind. In addition, the right camera 34 may be disposed such that the lens 35 is located rightward of the rightmost (outermost) end portion of the right front wheel 111 and the right rear wheel 112 when viewed from behind.

In addition, in the above first embodiment, at least one of the left camera 33 and the right camera 34 may be disposed inward of the step 52 in the left-right direction D3, for example, when it is allowable for the step 52 to be captured within the imaging range. Specifically, the left camera 33 may be disposed such that the lens 35 is located rightward of the leftmost (outermost) end portion of the left step 52 when viewed from behind. In addition, the right camera 34 may be disposed such that the lens 35 is located leftward of the rightmost (outermost) end portion of the right step 52 when viewed from behind.

In addition, in the above first embodiment, at least one of the left camera 33 and the right camera 34 may be disposed below the intermediate portion of the handrail 53 in the up-down direction D1 when a sufficiently wide imaging range can be ensured. Specifically, the left camera 33 may be mounted at a position below the intermediate portion of the left handrail 53 in the up-down direction D1. In addition, the right camera 34 may be mounted at a position below the intermediate portion of the right handrail 53 in the up-down direction D1.

In addition, in the above first embodiment, the left camera 33 and the right camera 34 may be disposed at different positions in at least one of the front-rear direction D2 and the up-down direction D1. In this configuration, the appearance of the object in the image captured by the left camera 33 differs from the appearance of the object in the image captured by the right camera 34. Therefore, the bird's-eye view image P1 may be generated after performing additional correction to eliminate the difference.

In addition, in the above first embodiment, the front camera 31 may be disposed, for example, outside the range of the height of the headlight 110. Specifically, the front camera 31 may be disposed in a manner to be located above the range of the height of the headlight 110, such as on the upper face of the hood 114. In addition, when a front grille is disposed at the front end portion of the hood 114, for example, the front camera 31 may be disposed in a manner to be located below the range of the height of the headlight 110, such as on the front grille.

In addition, in the above first embodiment, the rear camera 32 may be disposed within the range of the height of the work machine 12, for example, when it is allowable for the work machine 12 to be captured within the imaging range. Specifically, the rear camera 32 may be disposed in a manner to fall within the range between the uppermost end portion and the lowermost end portion of the work machine 12, when viewed from the left side or the right side.

In addition, in the above first embodiment, the rear camera 32 may be disposed in a manner to be located below the rear end portion of the ceiling of the cabin 50. That is, the rear camera 32 may be disposed below the highest point of the ceiling of the cabin 50.

### [Clauses]

The followings are Clauses regarding the summary of the invention extracted from the above-mentioned embodiments. Note that the configurations and processing functions described in the following Clauses can be selected and combined as appropriate.

### <Clause 1>

A work vehicle including a plurality of cameras that are mounted at front, rear, left, and right of a vehicle body and capture images used to generate a bird's-eye view image of the vehicle body and surroundings of the vehicle body as viewed from above, in which
among the plurality of cameras, at least one of a left camera that captures an image of an area to the left of the vehicle body and a right camera that captures an image of an area to the right of the vehicle body is disposed outward in a left-right direction of a storage device disposed in a manner to be exposed to the outside of the vehicle body.

### <Clause 2>

The work vehicle according to Clause 1, in which
the storage device includes at least one of a fuel tank, an SCR case, and a urea solution tank.

### <Clause 3>

The work vehicle according to Clause 1 or 2, in which
at least one of the left camera and the right camera is disposed outward in the left-right direction of a light emitting device disposed in a manner to be exposed to the outside of the vehicle body.

### <Clause 4>

The work vehicle according to Clause 3, in which
at least one of the left camera and the right camera is disposed outside a light irradiation range of the light emitting device.

### <Clause 5>

The work vehicle according to any one of Clauses 1 to 4, in which
at least one of the left camera and the right camera is disposed inward in the left-right direction of an outer end portion of a mirror disposed in a manner to be exposed to the outside of the vehicle body.

### <Clause 6>

The work vehicle according to any one of Clauses 1 to 5, in which
at least one of the left camera and the right camera is disposed inward in the left-right direction of an outer end portion of a wheel of the vehicle body.

### <Clause 7>

The work vehicle according to any one of Clauses 1 to 6, in which
at least one of the left camera and the right camera is disposed outward in the left-right direction of an outer end portion of a handrail for getting into or getting out of a cabin of the vehicle body.

### <Clause 8>

The work vehicle according to any one of Clauses 1 to 7, in which
the left camera and the right camera are disposed at the same position in at least one of a front-rear direction and an up-down direction.

### <Clause 9>

The work vehicle according to any one of Clauses 1 to 8, in which
each of the left camera and the right camera is supported by a support member that supports a light emitting device disposed in a manner to be exposed to the outside of the vehicle body, and
the support member is supported by a cabin of the vehicle body.

### <Clause 10>

The work vehicle according to any one of Clauses 1 to 9, in which
among the plurality of cameras, a front camera that captures an image of an area in front of the vehicle body is disposed at a front end portion of a hood of the vehicle body.

### <Clause 11>

The work vehicle according to any one of Clauses 1 to 10, in which
among the plurality of cameras, a front camera that captures an image of an area in front of the vehicle body is disposed rearward of a front end portion of a front wheel of the vehicle body.

### <Clause 12>

The work vehicle according to any one of Clauses 1 to 11, in which
among the plurality of cameras, a front camera is disposed within a range of a height of a headlight of the vehicle body in an up-down direction.

### <Clause 13>

The work vehicle according to Clause 12, in which
the front camera is disposed between a left-right pair of the headlights of the vehicle body.

### <Clause 14>

The work vehicle according to any one of Clauses 1 to 13, in which
when a work machine is attached to the vehicle body, among the plurality of cameras, a rear camera that captures an image of an area behind the vehicle body is disposed above the work machine.

### <Clause 15>

The work vehicle according to any one of Clauses 1 to 14, in which
among the plurality of cameras, a rear camera that captures an image of an area behind the vehicle body is changeable in a disposed position depending on a work machine to be attached to the vehicle body.

### <Clause 16>

The work vehicle according to any one of Clauses 1 to 15, in which
among the plurality of cameras, a rear camera that captures an image of an area behind the vehicle body is disposed forward of a rear end portion of a rear wheel of the vehicle body.

### <Clause 17>

The work vehicle according to any one of Clauses 1 to 16, further including a heat blocking cover having a heat blocking property and surrounding at least one of the plurality of cameras.

### REFERENCE SIGNS LIST

10 work vehicle
11 vehicle body
110 headlight
111 front wheel
112 rear wheel
114 hood
12 work machine
3 camera
31 front camera
32 rear camera
33 left camera
34 right camera
36 heat blocking cover
4 light emitting device
50 cabin
53 handrail
54 mirror
8 storage device
81 fuel tank
82 urea solution tank
83 SCR case
9 support member
P1 bird's-eye view image

## Claims

1. A work vehicle comprising a plurality of cameras that are mounted at front, rear, left, and right of a vehicle body and capture images used to generate a bird's-eye view image of the vehicle body and surroundings of the vehicle body as viewed from above, wherein
among the plurality of cameras, at least one of a left camera that captures an image of an area to the left of the vehicle body and a right camera that captures an image of an area to the right of the vehicle body is disposed outward in a left-right direction of a storage device disposed in a manner to be exposed to the outside of the vehicle body.

2. The work vehicle according to claim 1, wherein
the storage device includes at least one of a fuel tank, an SCR case, and a urea solution tank.

3. The work vehicle according to claim 1 or 2, wherein
at least one of the left camera and the right camera is disposed outward in the left-right direction of a light emitting device disposed in a manner to be exposed to the outside of the vehicle body.

4. The work vehicle according to claim 3, wherein
at least one of the left camera and the right camera is disposed outside a light irradiation range of the light emitting device.

5. The work vehicle according to claim 1 or 2, wherein
at least one of the left camera and the right camera is disposed inward in the left-right direction of an outer end portion of a mirror disposed in a manner to be exposed to the outside of the vehicle body.

6. The work vehicle according to claim 1 or 2, wherein
at least one of the left camera and the right camera is disposed inward in the left-right direction of an outer end portion of a wheel of the vehicle body.

7. The work vehicle according to claim 1 or 2, wherein
at least one of the left camera and the right camera is disposed outward in the left-right direction of an outer end portion of a handrail for getting into or getting out of a cabin of the vehicle body.

8. The work vehicle according to claim 1 or 2, wherein
the left camera and the right camera are disposed at the same position in at least one of a front-rear direction and an up-down direction.

9. The work vehicle according to claim 1 or 2, wherein
each of the left camera and the right camera is supported by a support member that supports a light emitting device disposed in a manner to be exposed to the outside of the vehicle body, and
the support member is supported by a cabin of the vehicle body.

10. The work vehicle according to claim 1 or 2, wherein
among the plurality of cameras, a front camera that captures an image of an area in front of the vehicle body is disposed at a front end portion of a hood of the vehicle body.

11. The work vehicle according to claim 1 or 2, wherein
among the plurality of cameras, a front camera that captures an image of an area in front of the vehicle body is disposed rearward of a front end portion of a front wheel of the vehicle body.

12. The work vehicle according to claim 1 or 2, wherein
among the plurality of cameras, a front camera that captures an image of an area in front of the vehicle body is disposed within a range of a height of a headlight of the vehicle body in an up-down direction.

13. The work vehicle according to claim 12, wherein
the front camera is disposed between a left-right pair of the headlights of the vehicle body.

14. The work vehicle according to claim 1 or 2, wherein
when a work machine is attached to the vehicle body, among the plurality of cameras, a rear camera that captures an image of an area behind the vehicle body is disposed above the work machine.

15. The work vehicle according to claim 1 or 2, wherein
among the plurality of cameras, a rear camera that captures an image of an area behind the vehicle body is changeable in a disposed position depending on a work machine to be attached to the vehicle body.

16. The work vehicle according to claim 1 or 2, wherein
among the plurality of cameras, a rear camera that captures an image of an area behind the vehicle body is disposed forward of a rear end portion of a rear wheel of the vehicle body.

17. The work vehicle according to claim 1 or 2, further comprising a heat blocking cover having a heat blocking property and surrounding at least one of the plurality of cameras.
